# EUROPEAN PATENT APPLICATION

(11) **EP 0 961 452 A2**
(43) Date of publication of application: **01.12.1999**
(21) Application number: 99303535.1
(22) Date of filing: 06.05.1999
(51) Int. Cl.: H04L 29/06, G06F 17/60

(54) **Publish & subscribe data processing apparatus, method and computer program product with use of a stream to distribute administrative and configuration information**

(30) Priority: 27.05.1998 US 85556
(71) Applicant: International Business Machines Corporation, Armonk, NY 10504 (US)
(72) Inventor: Hastings, Andrew Blair, Pittsburgh, Pennsylvania 15221 (US); Ramaswamy, Shankar, Somerset, NJ 08873 (US); Schmitz, Donald Edwin, Pittsburgh, Pennsylvania 15232 (US); Wang, Qinhua, Pittsburgh, Pennsylvania 15237 (US); Young, Michael Wayne, Pittsburgh, Pennsylvania 15243 (US)
(74) Representative: Moss, Robert Douglas

(57) **Abstract**

A publish/subscribe data processing broker apparatus has: a means for receiving from a publisher application data messages published on a subject-specific stream by the publisher application; and a means for distributing the received published data messages to a subscriber application which has requested to receive messages on the stream upon which the published messages were published; where one of the streams is reserved for administrative messages describing configuration changes to the broker apparatus.

## Description

### Field of the Invention

The present invention relates to the field of data processing and more specifically to data processing which distributes messages from suppliers (called, hereinafter, "publishers") of data messages to consumers (called, hereinafter "subscribers") of such messages.

### Background of the Invention

Publish/subscribe data processing systems have become very popular in recent years as a way of distributing data messages from publishing computers to subscribing computers. The increasing popularity of the Internet, which has connected a wide variety of computers all over the world, has helped to make such publish/subscribe systems even more popular. Using the Internet, a World Wide Web browser application (the term "application" or "process" refers to a software program, or portion thereof, running on a computer) can be used in conjunction with the publisher or subscriber in order to graphically display messages. Such systems are especially useful where data supplied by a publisher is constantly changing and a large number of subscribers needs to be quickly updated with the latest data. Perhaps the best example of where this is useful is in the distribution of stock market data.

In such systems, publisher applications of data messages do not need to know the identity or location of the subscriber applications which will receive the messages. The publishers need only connect to a publish/subscribe distribution agent process, which is included in a group of such processes making up a broker system (referred to hereafter as a broker), and send messages to the distribution agent process, specifying the subject of the message to the distribution agent process. The distribution agent process then distributes the published messages to subscriber applications which have previously indicated to the broker that they would like to receive data messages on particular subjects. Thus, the subscribers also do not need to know the identity or location of the publishers. The subscribers need only connect to a distribution agent process.

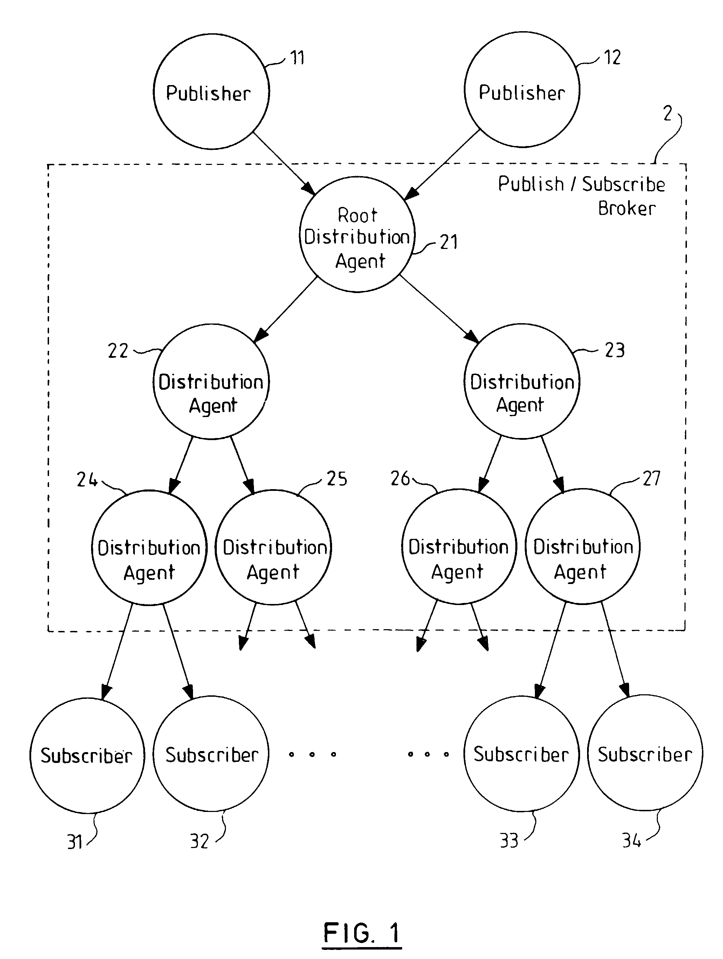

One such publish/subscribe system which is currently in use is shown in Fig. 1. Publishers 11 and 12 connect to the publish/subscribe broker 2 and send published messages to broker 2 which distributes the messages to subscribers 31, 32, 33, 34. Publishers 11 and 12, which are data processing applications which output data messages, connect to broker 2 using the well known inter-application data connection protocol known as remote procedure call (or RPC). Each publisher application could be running on a separate machine, alternatively, a single machine could be running a plurality of publisher applications. The broker 2 is made up of a plurality of distribution agents (21 through 27) which are connected in a hierarchial fashion which will be described below as a "tree structure". These distribution agents, each of which could be running on a separate machine, are data processing applications which distribute data messages through the broker 2 from publishers to subscribers. Subscriber applications 31, 32, 33 and 34 connect to the broker 2 via RPC in order to receive published messages.

Publishers 11 and 12 first connect via RPC directly to a root distribution agent 21 which in turn connects via RPC to second level distribution agents 22 and 23 which in turn connect via RPC to third level distribution agents 24, 25, 26 and 27 (also known as "leaf distribution agents" since they are the final distribution agents in the tree structure). Each distribution agent could be running on its own machine, or alternatively, groups of distribution agents could be running on the same machine. The leaf distribution agents connect via RPC to subscriber applications 31 through 34, each of which could be running on its own machine.

In order to allow the broker 2 to determine which published messages should be sent to which subscribers, publishers provide the root distribution agent 21 with the name of a distribution stream for each published message. A distribution stream (called hereinafter a "stream") is an ordered sequence of messages having a name (e.g., "stock" for a stream of stock market quotes) to distinguish the stream from other streams. Likewise, subscribers provide the leaf distribution agents 31 through 34 with the name of the streams to which they would like to subscribe. In this way, the broker 2 keeps track of which subscribers are interested in which streams so that when publishers publish messages to such streams, the messages can be distributed to the corresponding subscribers. Subscribers are also allowed to provide filter expressions to the broker in order to limit the messages which will be received on a particular stream (e.g., a subscriber 31 interested in only IBM stock quotes could subscribe to the stream "stock" by making an RPC call to leaf distribution agent 24 and include a filter expression stating that only messages on the "stock" stream relating to IBM stock should be sent to subscriber 31).

Whenever the configuration of the broker 2 is to be changed (e.g., to add or delete a stream or to add or delete a distribution agent) a systems administrator must inform each distribution agent of the change, so that the entire broker 2 can operate in a uniform fashion with the changed configuration data. In the past, this has required the systems administrator to contact each distribution agent in order to change its configuration data. Thus, carrying out configuration changes to the broker 2 has proven to be very time consuming for the systems administrator.

### Disclosure of the Invention

According to one aspect, the present invention provides a publish/subscribe data processing broker apparatus having: a means for receiving from a publisher application data messages published on a subject-specific stream by the publisher application; and a means for distributing the received published data messages to a subscriber application which has requested to receive messages on the stream upon which the published messages were published; where one of the streams is reserved for administrative messages describing configuration changes to the broker apparatus.

Thus, with the present invention, the systems administrator's job of making configuration changes to the broker is greatly facilitated. For example, the systems administrator need only publish a configuration change as a message to a stream dedicated to administrative messages. Each distribution agent of the broker will then subscribe to this stream and thus receive all of the published configuration changes. The systems administrator thus can still update each distribution agent in the broker with the latest configuration data set without having to separately contact each distribution agent. This also greatly reduces the cost of implementing the configuration changing mechanism.

Further, the invention also increases the availability of the updated configuration data. That is, the distribution of the updated configuration data throughout the broker architecture occurs automatically once the systems administrator has published the updated configuration data to the first portion of the broker architecture. This makes it much more likely that the changed configuration information will quickly be distributed throughout the broker architecture.

A still further advantage is that updated configuration data messages are always delivered in order on a stream thus ensuring that all configuration changes are received in the exact same order by all the processes in the broker architecture, thus serving to provide a high degree of stability and predictability of result.

Preferably, the means for distributing includes a plurality of distribution agent data processing processes and each of the distribution agent data processing processes subscribes to the stream reserved for administrative messages.

Preferably, a systems administrator publisher application publishes administrative messages describing configuration changes to the stream reserved for administrative messages.

Preferably, at least one of the publisher application or the subscriber application makes use of an Internet World Wide Web browser program to allow published messages to be sent or received over the Internet.

According to a second aspect, the present invention provides a data processing method having method steps corresponding to each element of the data processing apparatus of the first aspect of the invention.

According to a third aspect, the present invention provides a computer readable storage medium having a computer program stored on it which, when executed on a computer, carries out the functionality of data processing method of the second aspect of the invention.

### Brief Description of the Drawings

The invention will be better understood by referring to the detailed description of the preferred embodiments which will now be described in conjunction with the following drawing figures:
Figure 1 shows the architecture of the publish/subscribe system to which the preferred embodiment of the present invention relates;
Figure 2 shows the format of a published message to a stream called "administration" which a systems administrator publishes in order to change the configuration data of the broker of Fig. 1, according to a preferred embodiment of the present invention;
Figure 3 is a flowchart showing the steps taken by the broker of Fig. 1 when the systems administrator is changing the configuration data of the broker of Fig. 1, according to a preferred embodiment of the present invention; and
Figure 4 is a flowchart showing the steps taken by the broker of Fig. 1 when a new distribution agent is added to the broker tree structure, according to a preferred embodiment of the present invention.

### Detailed Description of the Preferred Embodiments

In Fig. 1 a publisher application 11, running on one computer, is, for example, a supplier of live stock market data quotes. That is, publisher application 11 provides frequent messages stating the present value of share prices. In this example, publisher application 11 is publishing messages on a stream called "stock" which has already been configured in the broker 2. As is well known, when publisher 11 wishes to publish a stock quote message to stream "stock", publisher 11 makes an RPC call to the root distribution agent 11 which is at the top level of the broker tree structure. In this example, subscriber application 32, running on another computer, has sent a subscription request via an RPC call to leaf distribution agent 24, which is at the bottom level of the tree structure, indicating that subscriber 32 would like to subscribe to stream "stock".

Thus, whenever publisher 11 publishes a data message to stream "stock" the distribution tree structure of broker 2 channels the message down through the root distribution agent 21, through any intermediary distribution agents (e.g., 22 in the example of Fig. 1) and through the leaf distribution agent 24 to the subscriber 32. This involves a series of RPC calls being made between each successive circle in the diagram of Fig. 1 connecting publisher 11 and subscriber 32 (i.e., 11 to 21, 21 to 22, 22 to 24 and 24 to 32).

This, so far, describes the operation of the prior art publish/subscribe broker. The preferred embodiment of the present invention will now be described by introducing a second publisher 12.

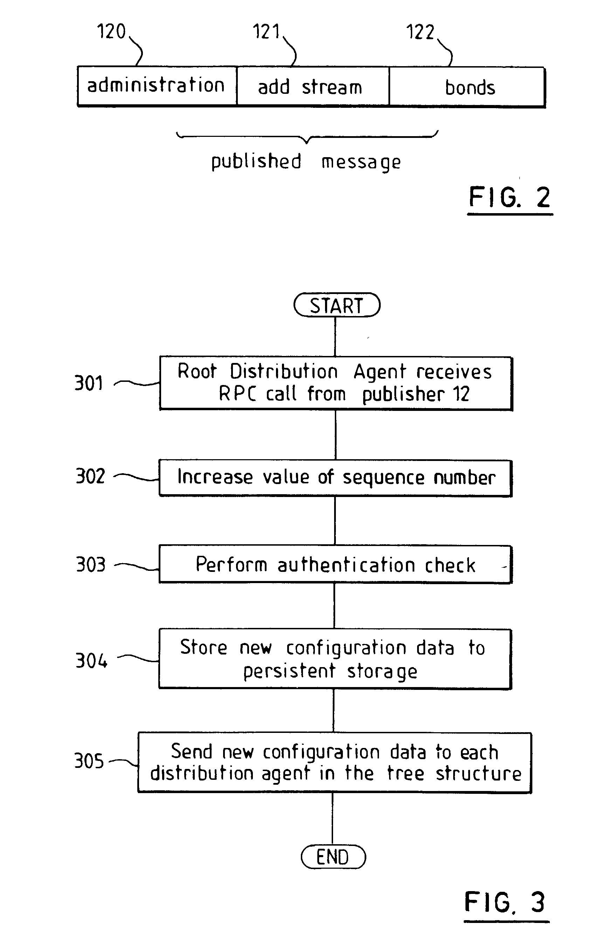

Publisher application 12, which may be running on a different computer, is, for example, a systems administrator publishing messages containing configuration changes of the publish/subscribe broker 2. For example, publisher application 12 can add a new stream called "bonds" for use within the publish/subscribe broker 2. Once this new stream is added, publisher 11 may choose to publish bond information on this stream in addition to the stock information it publishes on the "stock" stream. Also, a subscriber that is interested in only bonds and not stocks can subscribe to the new "bonds" stream. Such a change involves changing the configuration of the broker 2 because prior to this change the stream "bonds" did not exist within the broker 2. According to the preferred embodiment of the present invention, the publisher application 12 publishes a message to a stream called "administration" with the contents of the message being "add stream" of stream name "bonds". Publisher 12 makes an RPC call to root distribution agent 21 and publishes a message containing three fields as shown in Fig. 2. A first field 120 informs the root distribution agent 21 that the message is being published on the existing stream called "administration". This is a stream that is used only by the systems administrator publisher 12. The second field 121 indicates that the publisher is adding a new stream to the broker's configuration data. A third field 122 indicates that the new stream being added is to have the name "bonds".

In a similar fashion, the systems administrator publisher 12 can make other configuration changes to the overall publish/subscribe system, such as deleting a stream or changing the attributes of a stream, or adding or removing a broker process, by publishing a message to the "administration" stream. The operation of the broker 2 when configuration data is being changed will now be described in more detail by making reference to the flowchart of Fig. 3.

At step 301, the root distribution agent 21 receives an RPC call from the systems administration publisher 12, such an RPC call containing a published message as shown in Fig. 2. When the message is received, the root distribution agent increases (step 302) the value of the current sequence number by one and assigns the new sequence number to the newly received published message. For example, if the previously received message on stream "administration" was assigned the sequence number 99, the currently received published message on stream "administration" (the one shown in Fig. 2) would be assigned the sequence number 100. At step 303, the root distribution agent 21 performs a security check (e.g., using a well known security authentication technique, such as Kerberos) to determine whether the systems administrator publisher 12 is authorized to make changes to the configuration data. This is an important step to ensure that unauthorized parties are not allowed to change the configuration of the broker. At step 304, the root distribution agent 21 persistently stores the new configuration data (e.g., the addition of the new stream called "bonds") to local storage (e.g., to the hard disk drive of the computer running the root distribution agent application 21).

This new configuration data must now be copied to the local memory (e.g., cache memory) of each of the other distribution agents in the tree structure, as each distribution agent must be aware of the complete and updated configuration data set. Thus, at step 305, the new published message (shown in Fig. 2) along with the new sequence number (of value 100) is sent to each of the existing distribution agents in the tree (agents 22 through 27), as each of such distribution agents has previously entered a subscription request for all published messages on stream "administration". In this way, new configuration data from the systems administrator is sent to each of the distribution agents in the broker 2 with minimal effort on the part of the systems administrator. The systems administrator need only publish a message on stream "administrator".

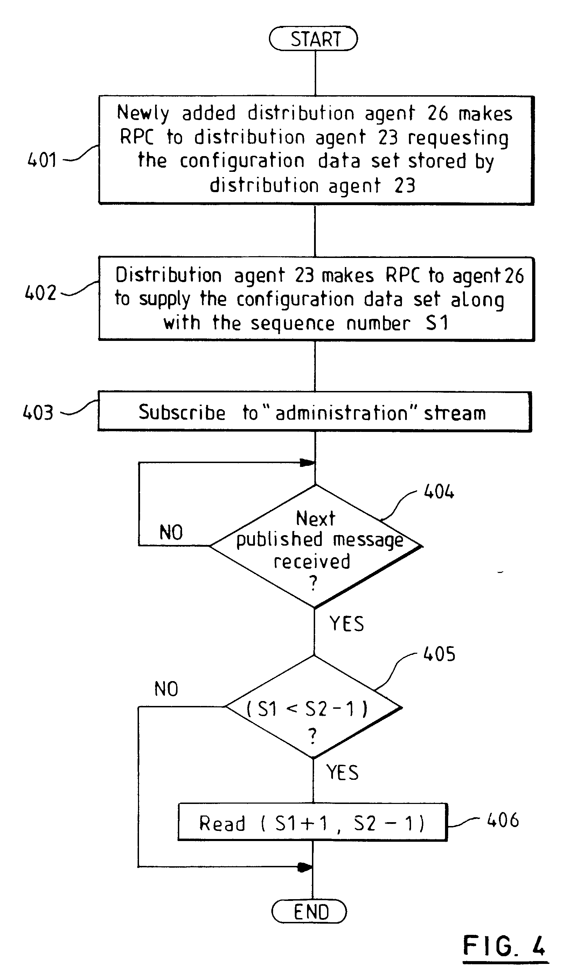

In order to provide a highly scalable broker architecture, new distribution agents must be allowed to be added to the broker tree structure, and the newly added distribution agent must also be provided with the complete set of configuration data. The operation of the broker 2 when a new distribution agent is added will now be described in conjunction with the flowchart of Fig. 4. In the example described, it will be assumed that distribution agent 26 is newly added to the tree structure.

At step 401, the newly added distribution agent 26 asks its parent distribution agent 23 (via an RPC call) for the complete configuration data set that the distribution agent 23 has stored in its local cache. At step 402, the parent distribution agent 23 makes an RPC call to the child distribution agent 26 to supply the child distribution agent 26 with the configuration data set which the parent distribution agent 23 has stored in its local cache, along with the latest sequence number S1 (e.g., 100). The newly added distribution agent 26 then subscribes to the "administration" stream (step 403) so that the distribution agent 26 will be kept informed of all future changes to the configuration data set. When the next published message is received (a check is done to determine this condition at step 404), the sequence number S2 (e.g., 103) of this published message is compared (step 405) to the sequence number S1 (e.g., 100) that was obtained from the parent distribution agent at step 402.

If the sequence number S1 is less than the sequence number S2 decremented by one (e.g., 103 decremented by one is 102 and 100 is less than 102) then this means that the parent distribution agent 23 did not have the most recent version of the configuration data set and that thus the new child distribution data is missing the configuration data messages published on the "administration" stream with sequence numbers between S1 (e.g., 100) and S2 (e.g, 103). Thus, at step 406, the distribution agent 26 performs a historical read operation on the root distribution agent's complete configuration data set stored in persistent storage in order to obtain the configuration data messages having sequence numbers (e.g., 101 and 102) between S1 and S2. On the other hand, if the enquiry at step 405 results in a NO answer, then there are no missing sequence numbers between S1 and S2 and thus the flow of control is directed to the end of the flowchart.

While the preferred embodiment of the present invention describes the use of a systems administrator as a publisher which publishes configuration change messages to a broker process, other arrangements are considered within the scope of the invention. For example, a systems administrator could connect to a broker process and send configuration change data via a normal RPC call (without publishing such data on a stream), and then the broker process would publish this configuration change data on the "administration" stream.

While a hierarchial tree structure of distribution agent processes has been described in the preferred embodiment for illustrative purposes, many other architectures are included within the scope of the invention. The invention can also be used in the context of a group of cooperating processes spanning different types of networks (including local area and wide area networks), different types of machines and using different inter-process communication protocols (i.e., RPCs, sockets, TCP/IP or any other well known inter-process communication protocol). For example, the invention can also be used in the environment of the Internet, which involves a plurality of different network types connecting different types of machines.

While the configuration data has been described as being persistently stored locally to a single process (the root distribution agent process 21), this data may, in fact, be spread over a plurality of processes.

While a single "administration" stream has been described. It is, of course, possible to have more than one such stream used for passing administration or configuration information. For example, one administration stream could be used for stream additions/deletions while another administration stream could be used for distribution agent additions/deletions.

## Claims

1. A publish/subscribe data processing broker apparatus comprising:
means for receiving from a publisher application data messages published on a subject-specific stream by the publisher application; and
means for distributing the received published data messages to a subscriber application which has requested to receive messages on the stream upon which the published messages were published;
wherein one of the streams is reserved for administrative messages describing configuration changes to the broker apparatus.

2. The apparatus of claim 1 wherein the means for distributing includes a plurality of distribution agent data processing processes.

3. The apparatus of claim 2 wherein each of the distribution agent data processing processes subscribes to the stream reserved for administrative messages.

4. The apparatus of claim 1 wherein a systems administrator publisher application publishes administrative messages describing configuration changes to the stream reserved for administrative messages.

5. The apparatus of claim 1 wherein at least one of the publisher application or the subscriber application makes use of an Internet World Wide Web browser program to allow published messages to be sent or received over the Internet.

6. A publish/subscribe data processing broker method comprising steps of:
receiving from a publisher application data messages published on a subject-specific stream by the publisher application; and
distributing the received published data messages to a subscriber application which has requested to receive messages on the stream upon which the published messages were published;
wherein one of the streams is reserved for administrative messages describing configuration changes to the broker apparatus.

7. A computer program product stored on a computer readable storage medium for, when executed on a computer, carrying out a method comprising steps of:
receiving from a publisher application data messages published on a subject-specific stream by the publisher application; and
distributing the received published data messages to a subscriber application which has requested to receive messages on the stream upon which the published messages were published;
wherein one of the streams is reserved for administrative messages describing configuration changes to the broker apparatus.
